# EUROPEAN PATENT SPECIFICATION

(11) **EP 2 630 313 B1**
(45) Date of publication and mention of the grant of the patent: **28.09.2016**
(21) Application number: 11788203.5
(22) Date of filing: 21.10.2011
(51) Int. Cl.: E04D 11/00, E04D 13/04

(54) **DRAINAGE SYSTEM**
DRAINAGESYSTEM
SYSTÈME DE DRAINAGE

(30) Priority: 22.10.2010 GB 201017894
(43) Date of publication of application: 28.08.2013
(73) Proprietor: A.B.G. Limited, Holmfirth, Yorkshire HD9 4DS (GB)
(72) Inventor: YOUNG, David, Holmfirth West Yorkshire HD9 4DS (GB)
(74) Representative: Appleyard Lees IP LLP
(86) International application number: PCT/GB2011/052057
(87) International publication number: WO 2012/052782

(56) References cited:
- EP-A2- 0 266 701
- WO-A1-2009/132439
- US-A1- 2002 007 592
- US-A1- 2008 236 041

## Description

### Field of the Invention

The present invention relates to drainage systems. The present invention further relates to methods of manufacturing drainage systems. The present invention still further relates to methods of providing drainage using a drainage material. Example embodiments are particularly suited to provision of a combined drainage, storage and attenuation layer, for example a drainage, storage and attenuation layer in a green roof.

### Background to the Invention

In geotechnical engineering, man made materials are often used in place of soil, clay, rock and the like to provide solutions to geotechnical engineering problems such as providing drainage. One application for such materials is in provision of a moisture barrier to separate soil from an underlying structure, for example as a moisture barrier in a green roof system.

One of the advantages of a green roof is the capacity of the roof to absorb rainwater and thereby reduce the peak flow of rainwater into subsequent drainage systems. This reduces the risk of flooding the subsequent drainage systems. The capacity to spread drainage load over time contributes to a sustainable drainage system (often referred to as SUDS).

Problems arise when a green roof is not able to absorb rainwater as designed, for example if there are repeated heavy rainfall events in quick succession. In this situation the green roof may become saturated, with further rain falling on the saturated roof becoming run off and thereby increasing the risk of flooding. A partial solution to this problem is to increase the amount of water that the green roof can absorb. However, this may lead to increased materials costs, and to increased load on the roof structure.

The problem of saturation may be exacerbated by changes to characteristics of a green roof over time. Some factors relevant to the capacity of the green roof to absorb rainwater may not be known at the time of installation of the green roof. For example, the soil and planting characteristics may change over time, and may cause deterioration in the SUDS performance of the green roof by affecting the storage capacity of the roof.

WO2009/132439 discloses a green roof module for covering a portion of a roofing surface with vegetation, includes a tray for containing a growing medium and vegetation, a permeable membrane and a drainage board. EP 0 266 701 discloses a drainage component according to the preamble of claim 1 and shows a substrate for grassing a roof that includes a load-bearing support plate having water-storage chambers which are open at the top and accommodate a filling with sponge-like absorption properties.

Example embodiments of the present invention aim to address at least one disadvantage of the prior art, whether identified herein or otherwise.

### Summary of the Invention

In a first aspect, the present invention provides a drainage system according to accompanying claim 1.

Herein, the term "fluid" is to be understood as including any non-solid substance, for example liquids, gases, and combinations thereof.

Suitably, the openings comprise drainage openings. Suitably, the drainage component is arranged in use with the first side of the drainage component upward, and arranged to receive fluid draining down onto the drainage system.

The system further comprises a substantially fluid impermeable component. The fluid channelling layer is arranged between the drainage component and the substantially fluid impermeable component. Suitably, the fluid channelling layer rests on the substantially fluid impermeable component. Suitably, the fluid channelling layer and the substantially fluid impermeable component extend over substantially the same area. Suitably, the fluid channelling layer and the substantially fluid impermeable component are in direct contact across substantially the whole of the area of the drainage system. Suitably, the substantially fluid impermeable component comprises a sheet material. Suitably, the substantially fluid impermeable component is bonded to the fluid channelling layer, or is otherwise integral with the fluid channelling layer. Suitably, the substantially fluid impermeable component comprises a base layer in the drainage system. Suitably, the drainage system comprises a cushioning layer. Suitably, the drainage system comprises a conforming layer, arranged to compress or expand and conform in use with a surface on which the drainage system is applied. Suitably, the conforming layer is arranged to maintain, in use, close contact between the fluid channelling layer and the substantially fluid impermeable component. Suitably, the conforming layer is arranged to maintain, in use, the fluid channelling layer in generally planar arrangement, by conforming and cushioning irregularities of the surface onto which the drainage system is in use applied. Suitably, the cushioning/conforming/base layer comprises a neoprene or other rubber type material.

Suitably, the fluid channelling layer receives fluid from the openings to channel fluid from the openings. The fluid channelling layer comprises a sheet material. The fluid channelling layer comprises a fluid permeable material. Suitably, the fluid channelling layer comprises a textile material. Suitably, the fluid channelling layer comprises a non-woven textile, a woven textile, or a combination thereof. Suitably, the fluid channelling layer comprises a plastics material. Suitably, the fluid channelling layer comprises a polypropylene material. Suitably, the fluid channelling layer comprises a long staple fibre material, a short fibre material, a continuous filament material, or a combination thereof.

The the fluid channelling layer is arranged to receive fluid from the drainage component, preferably from the drainage openings and to channel said fluid in the plane of the sheet. Suitably, the fluid channelling layer is arranged to receive fluid from the drainage openings and to channel said fluid wholly in the plane of the sheet. Suitably, the fluid channelling layer is arranged to receive fluid from the drainage openings and to channel said fluid beyond the extent of the drainage component. Suitably, the fluid channelling layer is arranged to receive fluid from the drainage openings and to channel said fluid to the edge of the drainage system. The fluid channelling layer is arranged to receive fluid from the drainage openings and to channel said fluid out of the drainage system at a controlled rate.

Suitably, the drainage component and fluid channelling medium cooperate to provide a drainage peak flow attenuation effect, wherein in use the drainage component provides a volume for fluid storage within the drainage system. Suitably, the fluid channelling layer provides a volume for fluid storage within the drainage system. Suitably, the drainage component cooperates with the fluid channelling medium to provide a controlled release of fluid from the drainage system. The rate of release of fluid from the drainage system via the fluid channelling medium is in use principally dependent on the volume of fluid stored in the drainage component. Suitably the volume for fluid storage comprises a fluid buffer.

Suitably, the drainage component comprises a sheet material. Suitably, the first and second sides of the drainage component are opposite faces of a sheet. Suitably, the fluid channelling layer is in contact with the second side of the drainage component.

Suitably, the drainage component and the fluid channelling layer are in contact with one another. Suitably, the drainage component and the fluid channelling layer are in contact with one another around the drainage openings. Suitably, the fluid channelling layer is in contact with the second side of the drainage component.

The drainage component comprises collection recesses. The collection recesses provide a volume for fluid storage within the drainage system. Suitably, the collection recesses are of substantially similar shape to each other. Suitably, the collection recesses are distributed in regular arrangement across the drainage component. Suitably, one or more of the collection recesses comprises a drainage opening therein. Suitably, the fluid channelling layer is arranged to extend through the drainage component into one or more of the collection recesses. Suitably, the fluid channelling layer is arranged to extend from the second side of the drainage component, through the drainage component to the first side of the drainage component. Suitably, the fluid channelling layer is arranged, in use to extend into, preferably to extend through one or more of the drainage openings. Suitably, on the first side of the drainage component, portions of the fluid channelling layer are located between the substantially impermeable layer and the drainage component. Suitably, on the first side of the drainage component portions of the fluid channelling layer are arranged under portions of the substantially fluid impermeable component. Suitably, on the second side of the drainage component portions of the fluid channelling layer are arranged above portions of the substantially fluid impermeable component. Suitably, the fluid channelling layer is bounded on one side by portions of the drainage component and on the other side by the substantially fluid impermeable component.

In some embodiments, a drainage opening is provided in only a fraction of the collection recesses, for example in half of the collection recesses. In other embodiments each collection recess comprises a drainage opening therein. In some embodiments, collection recesses comprise a plurality of drainage openings therein. References to the arrangement of collection recesses and drainage openings set out below are to be taken as relating to those collection recesses in which a drainage opening is present. As will be appreciated, providing collection recesses in which no drainage openings are present gives the drainage system a fluid storage capacity which is useful in providing irrigation for vegetation growing on the green roof in periods of drought.

Suitably, the collection recesses comprise a drainage opening at the lowermost part thereof. Suitably, lower, preferably lowermost parts of the collection recesses contact the fluid channelling layer. Suitably, the first side of the drainage component forms concave surfaces of the recesses. Suitably, the collection recesses are coupled at load-sharing grooves below the uppermost regions of the collection recesses, the load-sharing grooves arranged to enable fluid communication between adjacent recesses without the recesses overflowing.

Suitably, one or more of the drainage openings is at least partially surrounded by a border of material in contact with the fluid channelling layer. Suitably, the border of material comprises a band of material around the drainage opening, the band of material in contact with the fluid channelling layer.

Suitably, the drainage openings are generally circular in shape. In other embodiments square drainage openings, or drainage openings of other regular or irregular shapes are envisaged. Suitably, the drainage openings are of substantially similar shape to each other. Suitably, the drainage openings are distributed in regular arrangement across the drainage material. Suitably, the drainage openings comprise more than 1% of the area of the drainage component, preferably more than 2% of the area, more preferably more than 5%, preferably more than 10%, for example more than 20% of the area of the first face. Suitably, the drainage openings comprise up to 20% of the area of the drainage component, preferably up to 10%, more preferably up to 5%, preferably up to 2%, for example up to 1% of the area of the first face. In especially preferred embodiments, the drainage openings comprise approximately 3% of the area of the first face.

Suitably, the drainage openings have a major dimension of less than 100mm across the first face. Suitably, the drainage openings have a major dimension of greater than 2mm across the first face. Suitably, the drainage openings have a diameter in the range 5mm to 25mm, preferably in the range 10 to 20mm, more preferably in the range 12 to 15mm.

Suitably, the openings comprise overflow openings. Suitably, the drainage component comprises drainage openings and overflow openings. Suitably, one or more of the overflow openings provide a fluid drainage path between the first side of the drainage component and the second side thereof. Suitably, one or more of the overflow openings are provided in the drainage component relatively further from the fluid channelling layer than the drainage openings. Suitably, in use one or more of the overflow openings are provided above the drainage openings. Suitably, in use one or more of the overflow openings are provided at the highest point of the first side of the drainage component. Suitably, one or more of the overflow openings are at least partially surrounded by a border of material not in contact with the fluid channelling layer. Suitably, the border of material comprises a band of material around the overflow openings, the band of material not in contact with the fluid channelling layer. Suitably, one or more of the overflow openings is arranged to allow fluid to pass from the first side of the drainage component into a void between the second side of the drainage component and the fluid channelling layer.

Suitably, the overflow openings are generally circular in shape. In other embodiments square overflow openings, or overflow openings of other regular or irregular shapes are envisaged. Suitably, the overflow openings are of substantially similar shape to each other. Suitably, the overflow openings are distributed in regular arrangement across the drainage material. Suitably, the overflow openings comprise more than 1% of the area of the drainage component, preferably more than 2% of the area, more preferably more than 5%, preferably more than 10%, for example more than 20% of the area of the first face. Suitably, the overflow openings comprise up to 20% of the area of the drainage component, preferably up to 10%, more preferably up to 5%, preferably up to 2%, for example up to 1% of the area of the first face. In especially preferred embodiments, the drainage openings comprise approximately 3% of the area of the first face.

Suitably, the overflow openings have a major dimension of less than 100mm across the first face. Suitably, the overflow openings have a major dimension of greater than 2mm across the first face. Suitably, the overflow openings have a diameter in the range 5mm to 25mm, preferably in the range 10 to 20mm, more preferably in the range 12-15mm.

Suitably, the drainage component is substantially fluid impermeable other than at the openings. Suitably, the drainage component is made of a substantially fluid impermeable material and/or has a substantially fluid impermeable layer, other than at the openings. Suitably, the drainage component is made of a substantially fluid impermeable material and/or has a substantially fluid impermeable surface. Suitably, the drainage component comprises a plastics material, preferably a HDPE material.

In other embodiments the drainage component comprises a fluid permeable material. Suitably, the drainage component comprises an open cellular material. Suitably, the drainage component comprises a rubber crumb material. Suitably, in embodiments in which the drainage component comprises a fluid permeable material, the drainage openings and overflow openings may comprise in combination micro openings of the fluid permeable material and macro openings. Suitably, the macro openings are as described above. Suitably, the micro openings provide a controlled resistance to fluid flow there-through.

Suitably, the fluid channelling layer is fixedly coupled to the drainage component. Suitably, the fluid channelling layer is fixedly coupled to the drainage component by adhesive, or by bonding, or by a thermal or other welding process. Suitably, the fluid channelling layer is coupled to the drainage components at a border of material at or around one or more, for example at each of the drainage openings.

Suitably, the drainage system further comprises a drainage recess cover. Suitably, the drainage recess cover comprises a fluid permeable material. Suitably, the drainage recess cover is arranged in use to maintain growing medium and plant material away from the drainage openings. Suitably, the drainage recess cover is arranged in use to maintain growing medium and plant material away from the overflow openings. Suitably, the drainage recess cover comprises a textile material. Suitably, drainage recess cover comprises a non-woven textile, a woven textile or a combination thereof. Suitably, the drainage recess cover comprises a plastics material. Suitably, the drainage recess cover comprises a polypropylene material. Suitably, the drainage recess cover comprises a.long staple fibre material, a short fibre material, a continuous filament material, or a combination thereof.

Suitably, the fluid is water, or an aqueous solution.

Suitably, the drainage system is suitable for use in a green roof system. Suitably, the drainage component is suitable for supporting a growing medium above a first side thereof. Suitably, the drainage system comprises a green roof drainage system. Suitably, the drainage system comprises a growing medium above the first side of the drainage component. Suitably, the drainage component is suitable for supporting material in the form of block paving, decking or other structural, earthen or related materials above the first side thereof.

In a second aspect, the present invention provides a method of manufacturing a drainage system according to the accompanying independent method claim 11.

The drainage component and fluid channelling layer are substantially as described in relation to the first aspect of the invention above, and operate in the ways described in relation to the first aspect of the invention above. The fluid channelling layer is arranged in use to receive fluid from the openings and/or to channel fluid to the openings.

The method further comprises providing a substantially impermeable layer. The substantially impermeable layer is provided such that the fluid channelling layer lies between the drainage component and the substantially fluid impermeable component. Suitably, the method comprises resting the fluid channelling layer on the substantially impermeable layer. Suitably, the method comprises coupling the fluid channelling layer to the substantially impermeable layer. Suitably, the coupling comprises adhering or welding the substantially impermeable layer to the fluid channelling layer. The substantially impermeable layer is substantially as described in relation to the first aspect of the invention above.

Suitably, the method further comprises coupling the drainage component to the fluid channelling layer. Suitably, the coupling comprises adhering or welding the drainage component to the fluid channelling layer.

Suitably, the method further comprises providing a drainage recess cover. Suitably, the drainage recess cover is substantially as described in relation to the first aspect of the invention above. Suitably, the method comprises coupling the drainage component to the drainage recess cover. Suitably, the method comprises providing growing medium onto the drainage recess cover.

In a third aspect the present invention provides a method of providing drainage using a the drainage material of the first aspect, or a drainage material manufactured according to the second aspect, the method comprising installing the drainage material on a surface to be drained.

Suitably, the method comprises providing drainage for a surface to be drained which is part of a structure. Suitably, the method comprises providing drainage for a roof.

Suitably, the method comprises covering the drainage component with a growing medium.

### Brief Introduction to the Drawings

For a better understanding of the invention, and to show how embodiments of the same may be carried into effect, reference will now be made, by way of example, to the accompanying diagrammatic drawings in which:
Figure 1 shows a perspective view of the upper side of a drainage component according to a first embodiment of the present invention;
Figure 2 shows a plan view of the drainage component of Figure 1;
Figure 3 shows a perspective view of the upper side of a drainage component according to a second embodiment of the present invention;
Figure 4 shows a plan view of a drainage component according to a third embodiment of the present invention;
Figure 5 shows a side sectional view of the drainage component of Figure 1 as part of a drainage structure;
Figure 5a shows a side section view of a drainage component according to another example embodiment of the present invention as part of a drainage structure;
Figure 6 shows a side sectional view schematically illustrating fluid flow paths in the drainage system of Figure 5;
Figure 6a shows a side section view schematically illustrating fluid flow paths in the drainage system of Figure 5a;
Figure 7 shows a perspective view of the upper side of a drainage component according to a further embodiment of the present invention;
Figure 8 shows a plan view of the drainage component of Figure 7;
Figure 9 shows a side sectional view of the drainage component of Figure 7 as part of a drainage structure; and
Figure 10 shows a side sectional view schematically illustrating fluid flow paths in the drainage system of Figure 9

### Description of Example Embodiments

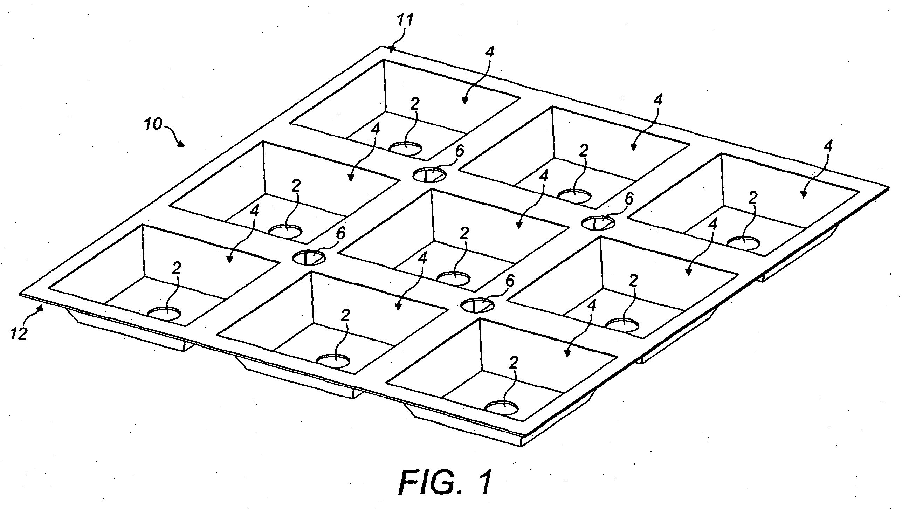

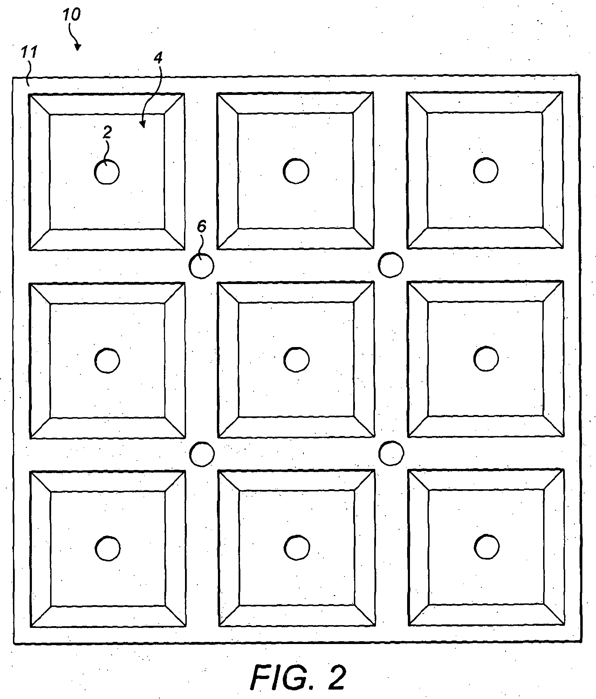

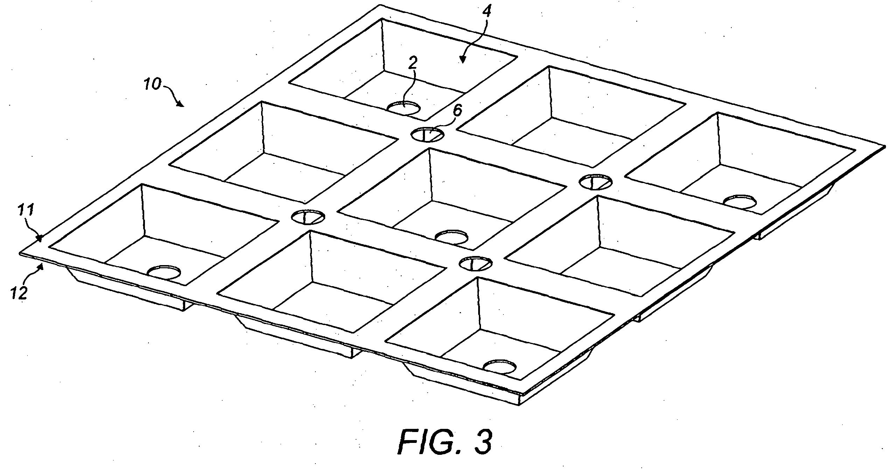

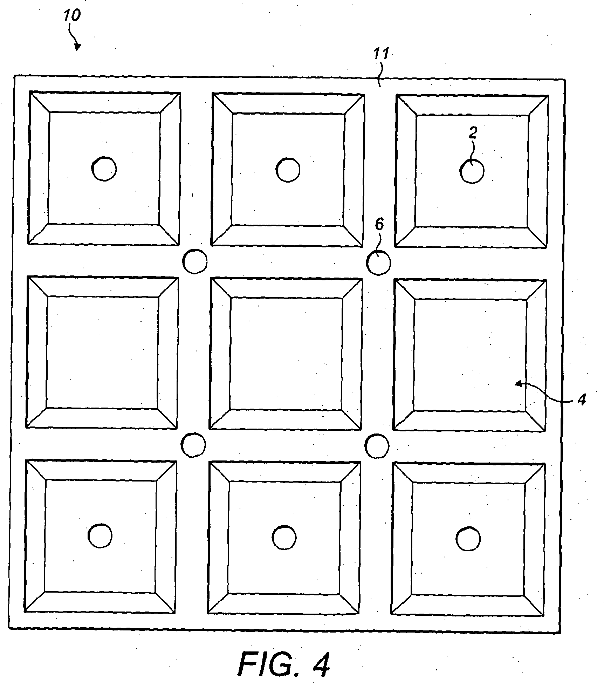

Figure 1 shows a perspective view of the upper side of a drainage component 10 according to a first embodiment of the present invention. The drainage component 10 comprises a sheet of substantially impermeable plastics material with openings formed therein. The openings allow fluid communication between the first, upper side 11 of the drainage component and a second, lower side 12 of the drainage component. The openings comprise drainage openings 2 provided at the bottom of concave recesses 4. The openings further comprise overflow openings 6 provided above the drainage openings 2, at raised portions of the drainage component 10. Figure 2 shows the component of Figure 1 in plan view. Figures 3 and 4 show related embodiments in which the arrangement of openings on the drainage component 10 is different to that shown in Figures 1 and 2.

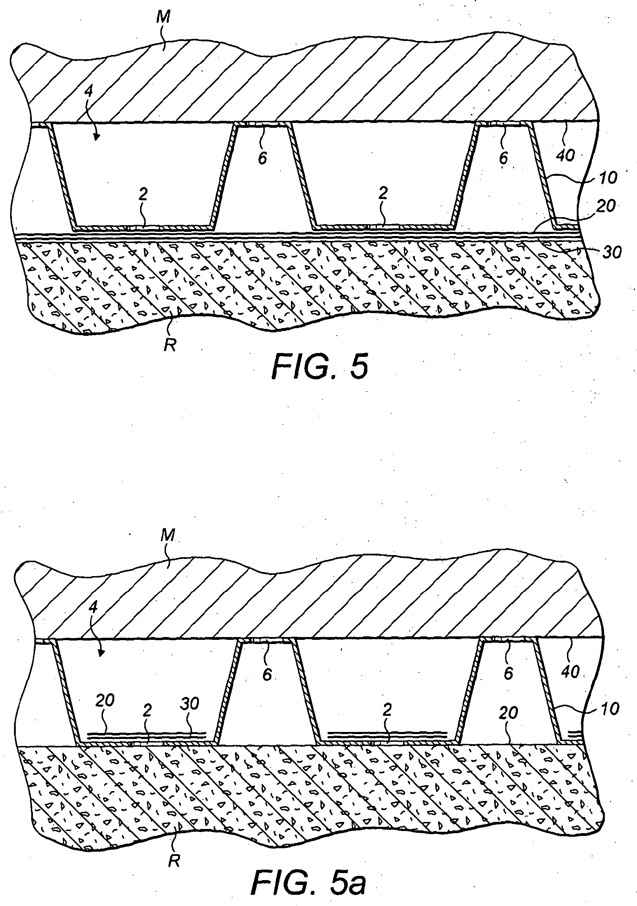

The drainage component is in use incorporated into a green roof system. Figure 5 shows a side sectional view of a green roof system including the drainage component 10. Supported above the drainage component 10 is growing medium M. A fluid channeling component 20 is associated with the drainage component 10, and is arranged to receive fluid from the openings 2, 6 and to channel fluid from the openings 2, 6.

Herein, the term "fluid" is to be understood as including any non-solid substance, for example liquids, gases, and combinations thereof, but in typical green roof applications the fluid will comprise water such as rain water, melt-water or the like.

The fluid channelling component 20 comprises a sheet of fluid permeable, continuous filament textile material, and is arranged to receive fluid from the drainage openings 2 and to channel said fluid in the plane of the sheet of the fluid channelling component 20. The fluid channelling component 20 is arranged to receive fluid from the drainage openings 6 and to channel said fluid to out of the drainage system at a controlled rate.

Fluid is prevented from seeping from the fluid channelling component 20 onto the roof R by a substantially impermeable component 30 which contacts the fluid channelling component 20 and the roof R. The fluid channelling component 20 is arranged between the drainage component 10 and the substantially fluid impermeable component 30. In the example embodiment shown, the substantially fluid impermeable component is a neoprene rubber layer of for example 2mm thickness. This material provides cushioning at the base of the drainage system, conforming to irregularities on the roof R as it is compressed onto the roof by the higher layers: The cushioning and conforming ensures that the fluid channelling component 20 and the substantially impermeable component 30 are in close, substantially gap-free contact with one another. In this arrangement the drainage system constrains the fluid drainage path to within the fluid channelling component 20. That is, no gaps are provided between the fluid channelling component 20 and the substantially impermeable component 30 through which fluid may drain, meaning that the drainage characteristics are not impacted by variations in the surface of the roof R. In other embodiments, the fluid channelling component 20 and substantially impermeable component 30 may be bonded to one another, or be integral with one another so that no gaps are formed there-between for fluid to drain through.

The drainage component 10 and the fluid channelling component 20 are in contact with one another around the drainage openings at the bottom of the collection recesses 4. The drainage openings 2 are surrounded by a border of material in contact with the fluid channelling layer 20, and fluid draining through the drainage openings is therefore required to pass into and along the fluid channelling layer 20 to drain from the bottom of the collection recesses 4.

Figure 5 also shows a drainage recess cover 40. The drainage recess cover comprises a fluid permeable material in the form of a non-woven textile sheet of plastic-based, long staple fibre material. The drainage recess cover in use maintains growing medium M and plant material away from the drainage openings 2, by separating the growing medium M from the collection recesses 4.

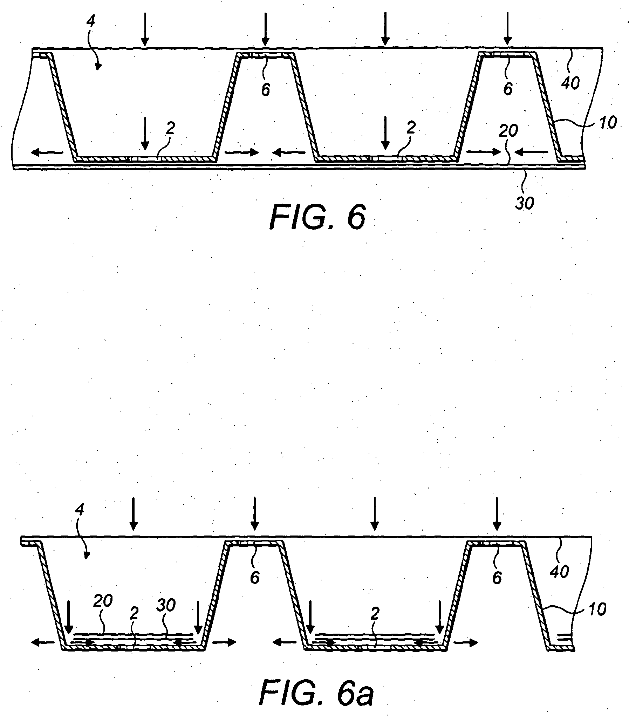

Figure 6 shows the drainage system of Figure 5 in isolation from the growing medium M and the roof R, but with fluid paths indicated symbolically with arrows. When fluid seeps down through the growing medium M under gravity it passes through the drainage recess cover 40 and into the collection recesses 4. Thereafter, fluid passes into the fluid channelling layer 20 and is channelled away from the drainage openings 2 according to the hydrostatic pressure exerted by fluid in the collection recesses 4, and the wicking effect of the fluid channelling layer 20. The rate of fluid flow will depend on the depth of fluid collected in the collection recess 4, the area of the fluid channelling layer 20 exposed to fluid ingress via the drainage opening 2 and the permeability and degree of saturation of the fluid channelling layer 20. However, the growing medium M is not a factor that impacts on the rate of fluid flow, when considering fluid that has entered the collection recesses 4.

In addition to enabling drainage from the drainage openings 2, the system of Figures 5 and 6 provides the ability for fluid to pass from the growing medium M or from the collection recesses 4 through the overflow openings 6. The overflow openings 6 provide a fluid drainage path between the first, upper side 11 of the drainage component 10 and the second, lower side 12 thereof. The overflow openings 6 are provided above the drainage openings 2, in the example embodiments shown in position at the highest point of the first side of the drainage component 10. The overflow openings 6 are arranged to allow fluid to pass from the first, upper side 11 of the drainage component 10 into a void between the second, lower side 12 of the drainage component 10 and the fluid channelling component 20. The void in question is located between collection recesses 4.

Figures 5a and 6a show a further embodiment of the drainage system in which collection recesses 4 of the drainage component 10 are provided with a fluid channelling component 20 and substantially fluid impermeable component 30 there-within. In these embodiments the passage of fluid from the collection recesses 4 occurs as fluid passes through the plane of the fluid channelling component 20 between the first side of the drainage component 10 and the substantially fluid impermeable component 30. Fluid is then channelled by the fluid channelling component 20 to the drainage openings 2, and drains there-through. In Figures 5a and 6a there is no fluid channelling component present on the second side of the drainage component 10, however the Figure 5a and 6a features could be combined with the fluid channelling component and/or substantially fluid impermeable component from Figures 5 and 6, for example in a combination where the fluid channelling component on the first and second sides of the drainage component is integrally formed.

The drainage component comprises a plastics material, preferably a HDPE material, with holes formed therein to provide the drainage and overflow openings. However, in other embodiments the drainage component may comprise two or more openings formed in some or all collection recesses, or may comprise an open cellular material, a rubber crumb material or another material comprising numerous openings.

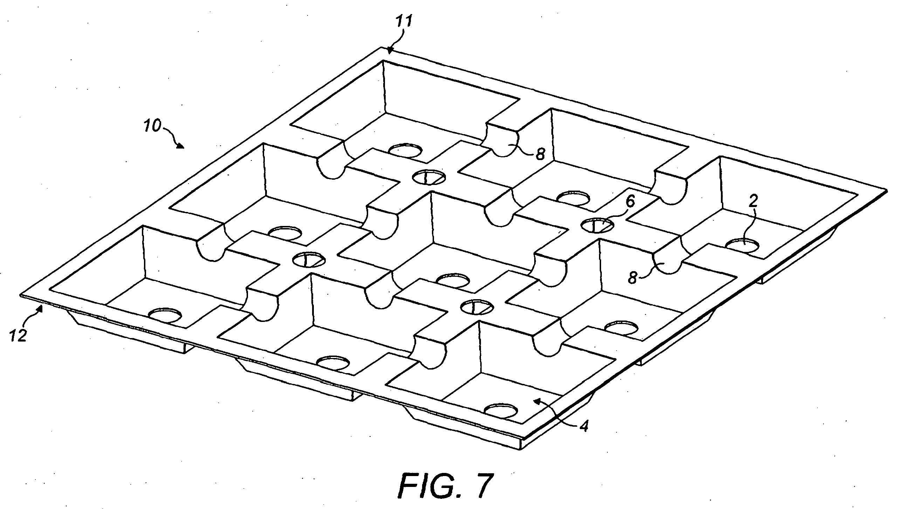

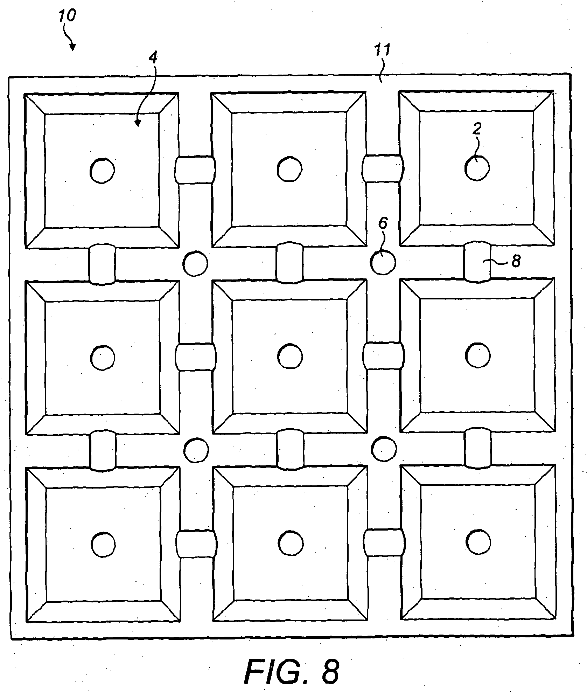

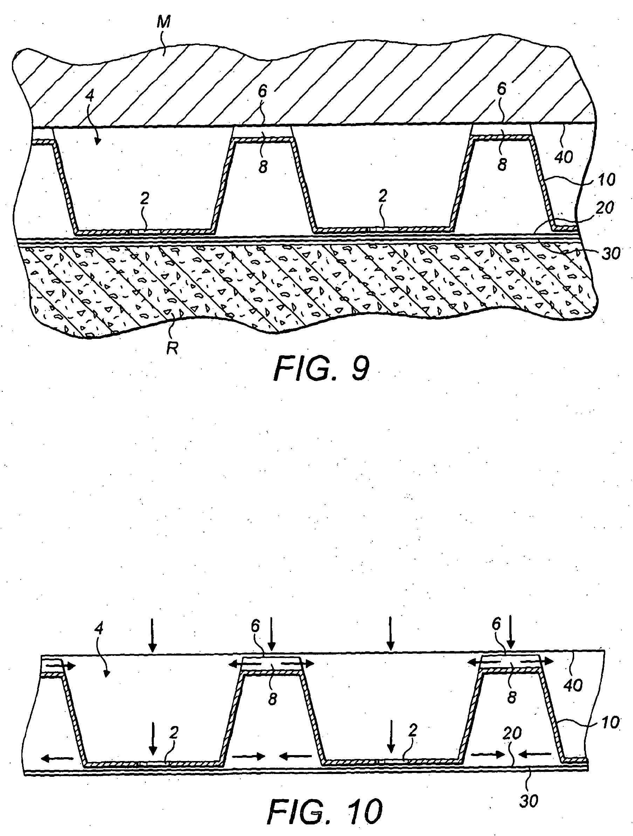

In other embodiments such as those shown in Figures 7-10, the drainage component comprises collection recesses that are coupled at load-sharing grooves 8. The load sharing grooves enable fluid to flow from one collection recess to adjacent collection recesses, spreading the load across the drainage component and thereby reducing the impact of one collection recess becoming overloaded while others are not. Fluid flow paths for the embodiments that include load-sharing grooves 8 are shown in Figure 10.

To provide a controlled drainage, the fluid channelling component in the example embodiments described serves to reduce the impact on drainage of characteristics of the surface onto which the drainage material is used. Furthermore, by providing a fluid channelling layer which is readily accessible to moisture through the drainage component but isolated from the growing medium, the effect of growing medium or other matter present on the drainage component is reduced.

Although the embodiments described herein are intended for drainage of water (which herein includes aqueous based solutions as well as pure H₂O) from a green roof, other related embodiments can also be envisaged as suitable for draining other fluids, including gasses, from other media and in other situations. In relation to drainage of water in a green roof, the drainage system may also be usefully employed under block paving, car park decks or alternatively as an SUDS layer in the ground.

## Claims

1. A drainage system, comprising:
a drainage component (10) for supporting material above a first side thereof and comprising collection recesses (4) arranged to provide a volume for fluid storage within the drainage system, the collection recesses (4) each including an opening therein to allow fluid communication between the first side of the drainage component and a second side of the drainage component; and
a substantially fluid impermeable component (30),
a fluid channelling layer (20) arranged to channel fluid from the openings and out of the drainage system by cooperating with the drainage component (10);
wherein the fluid channelling layer (20) is arranged between the drainage component (10) and the substantially fluid impermeable component (30),
and **characterised in that**, in use, the fluid channelling layer (20) comprises a fluid permeable sheet material that controls the rate of channelling of fluid in the drainage system in the plane of the fluid channelling layer (20), according to a wicking effect of the fluid channelling layer (20), depth of fluid collected in the collection recesses (4), the area of the fluid channelling layer (20) exposed to fluid ingress via the openings in the collection recesses (4), and the permeability and degree of saturation of the fluid channelling layer (20).

2. The drainage system of claim 1, wherein:
the openings comprise drainage openings (2);
the drainage component (10) is arranged in use with the first side of the drainage component upward, and arranged to receive fluid draining down onto the drainage system; and
the fluid channelling layer (20) is arranged to receive fluid from drainage openings (2) of the drainage component (10), and to channel said fluid in the plane of the sheet.

3. The drainage system of claim 1 or 2, wherein the substantially fluid impermeable component (30) is bonded to the fluid channelling layer (20), or is otherwise integral with the fluid channelling layer (20).

4. The drainage system of any preceding claim, comprising a conforming layer, arranged to compress or expand and conform in use with a surface on which the drainage system is applied, wherein the conforming layer is arranged to:
maintain, in use, close contact between the fluid channelling layer (20) and the substantially fluid impermeable component (30) of the drainage system; and/or
maintain, in use, the fluid channelling layer (20) in generally planar arrangement, by conforming and cushioning irregularities of the surface onto which the drainage system is in use applied.

5. The drainage system of any preceding claim, wherein:
the first and second sides of the drainage component (10) are opposite faces of a sheet;
the fluid channelling layer (20) comprises a layer which is in contact with the second side of the drainage component (10); and
the drainage component (10) and the fluid channelling layer (20) are in contact with one another around the drainage openings (2).

6. The drainage system of any preceding claim, wherein, on the first side of the drainage component (10), portions of the fluid channelling layer (20) are arranged under portions of the substantially fluid impermeable component (30) and, on a second side of the drainage component (10), portions of the fluid channelling layer (20) are arranged above portions of the substantially fluid impermeable component (30).

7. The drainage system of any preceding claim, wherein the fluid channelling layer (20) is bounded on one side by portions of the drainage component (10) and on the other side by a substantially fluid impermeable component (30).

8. The drainage system of claim 7, wherein the fluid channelling layer (20) is arranged to extend through the drainage component (10) into one or more of the collection recesses (4), from the second side of the drainage component (10), through the drainage component (10) to the first side of the drainage component (10).

9. The drainage system of claim 7 or 8, wherein:
the drainage component (10) comprises drainage openings (2) and overflow openings (6) with one or more of the overflow openings (6) providing a fluid drainage path between the first side of the drainage component (10) and the second side thereof and being provided in the drainage component (10) relatively further from the fluid channelling layer (20) than the drainage openings (2); and one or more of the overflow openings (6) is arranged to allow fluid to pass from the first side of the drainage component (10) into a void between the second side of the drainage component (10) and the fluid channelling layer (20).

10. The drainage system of any preceding claim, wherein:
the drainage component (10) is substantially fluid impermeable other than at the openings; and
the drainage component (10) comprises a fluid permeable material, and drainage openings (2) and overflow openings (6) thereof comprising in combination micro openings of the fluid permeable material and macro openings are provided, and wherein
the micro openings provide a controlled resistance to fluid flow there-through.

11. A method of manufacturing a drainage system, the method comprising bringing a drainage component including collection recesses arranged to provide a volume for fluid storage within the drainage system, the collection recesses each comprising an opening to allow communication between the first side thereof and a second side thereof into contact with a fluid channelling layer, such that in use the fluid channelling layer is arranged to channel fluid from the openings and out of the drainage system in a plane of the fluid channelling layer, wherein the fluid channelling layer is arranged between the drainage component and a substantially fluid impermeable component, wherein the fluid channelling layer comprises a fluid permeable sheet material that controls the rate of channelling of fluid in the drainage system according to a wicking effect of the fluid channelling layer, depth of fluid collected in the collection recesses, the area of the fluid channelling layer exposed to fluid ingress via the openings in the collection recesses, and the permeability and degree of saturation of the fluid channelling layer.

12. A method of providing drainage using a drainage system according to any one of claims 1 to 10, or a drainage system manufactured according to claim 11, the method comprising installing the drainage system on a surface to be drained.

## Patentansprüche

1. Drainagesystem, aufweisend:
eine Drainagekomponente (10) zum Halten von Material über ihrer ersten Seite und Sammelmulden (4) aufweisend, die zum Bereitstellen eines Volumens zur Fluidaufnahme im Drainagesystem angeordnet sind, wobei die Sammelmulden (4) jeweils eine Öffnung enthalten, um eine strömungstechnische Verbindung zwischen der ersten Seite der Drainagekomponente und einer zweiten Seite der Drainagekomponente zu erlauben; und
eine im Wesentlichen fluidundurchlässige Komponente (30),
eine Fluidkanalisierungsschicht (20), die zum Kanalisieren von Fluid von den Öffnungen und aus dem Drainagesystem hinaus angeordnet ist, indem sie mit der Drainagekomponente (10) zusammenarbeitet;
wobei die Fluidkanalisierungsschicht (20) zwischen der Drainagekomponente (10) und der im Wesentlichen fluidundurchlässigen Komponente (30) angeordnet ist,
und **dadurch gekennzeichnet, dass** die Fluidkanalisierungsschicht (20) in Gebrauch ein fluiddurchlässiges Plattenmaterial aufweist, das die Kanalisierungsrate von Fluid im Drainagesystem in der Ebene der Fluidkanalisierungsschicht (20) gemäß einer Dochtwirkung der Fluidkanalisierungsschicht (20), Tiefe von Fluid, das in den Sammelmulden (4) gesammelt ist, der Fläche der Fluidkanalisierungsschicht (20), die einem Fluidzustrom über die Öffnungen in den Sammelmulden (4) ausgesetzt ist, und der Durchlässigkeit und dem Sättigungsgrad der Fluidkanalisierungsschicht (20) kontrolliert.

2. Drainagesystem nach Anspruch 1, wobei:
die Öffnungen Drainageöffnungen (2) aufweisen;
die Drainagekomponente (10) in Gebrauch mit der ersten Seite der Drainagekomponente nach oben weisend angeordnet ist und zum Aufnehmen von Fluid angeordnet ist, das auf das Drainagesystem herabströmt; und
die Fluidkanalisierungsschicht (20) zum Aufnehmen von Fluid aus Drainageöffnungen (2) der Drainagekomponente (10) und zum Kanalisieren des Fluids in der Ebene der Platte angeordnet ist.

3. Drainagesystem nach Anspruch 1 oder 2, wobei die im Wesentlichen fluidundurchlässige Komponente (30) an die Fluidkanalisierungsschicht (20) gebunden oder auf andere Weise mit der Fluidkanalisierungsschicht (20) integriert ist.

4. Drainagesystem nach einem der vorangehenden Ansprüche, das eine Anpassungsschicht aufweist, die zum Zusammenpressen oder Ausdehnen und Anpassen in Gebrauch mit einer Oberfläche, auf welcher das Drainagesystem angewendet wird, angeordnet ist, wobei die Anpassungsschicht angeordnet ist zum:
Aufrechterhalten eines engen Kontakts in Gebrauch zwischen der Fluidkanalisierungsschicht (20) und der im Wesentlichen fluidundurchlässigen Komponente (30) des Drainagesystems; und/oder
Aufrechterhalten der Fluidkanalisierungsschicht (20) in Gebrauch in einer im Allgemeinen ebenen Anordnung durch Anpassen an und Abpolstern von Unregelmäßigkeiten der Oberfläche, auf welcher das Drainagesystem in Gebrauch angewendet wird.

5. Drainagesystem nach einem der vorangehenden Ansprüche, wobei:
die erste und zweite Seite der Drainagekomponente (10) gegenüberliegende Flächen einer Platte sind;
die Fluidkanalisierungsschicht (20) eine Schicht aufweist, die mit der zweiten Seite der Drainagekomponente (10) in Kontakt steht; und
die Drainagekomponente (10) und die Fluidkanalisierungsschicht (20) um die Drainageöffnungen (2) herum miteinander in Kontakt stehen.

6. Drainagesystem nach einem der vorangehenden Ansprüche, wobei an der ersten Seite der Drainagekomponente (10) Abschnitte der Fluidkanalisierungsschicht (20) unter Abschnitten der im Wesentlichen fluidundurchlässigen Komponente (30) angeordnet sind und an einer zweiten Seite der Drainagekomponente (10) Abschnitte der Fluidkanalisierungsschicht (20) über Abschnitten der im Wesentlichen fluidundurchlässigen Komponente (30) angeordnet sind.

7. Drainagesystem nach einem der vorangehenden Ansprüche, wobei die Fluidkanalisierungsschicht (20) an einer Seite durch Abschnitte der Drainagekomponente (10) und an der anderen Seite durch eine im Wesentlichen fluidundurchlässige Komponente (30) begrenzt ist.

8. Drainagesystem nach Anspruch 7, wobei die Fluidkanalisierungsschicht (20) so angeordnet ist, dass sie sich durch die Drainagekomponente (10) in eine oder mehrere der Sammelmulden (4) von der zweiten Seite der Drainagekomponente (10) durch die Drainagekomponente (10) zur ersten Seite der Drainagekomponente (10) erstreckt.

9. Drainagesystem nach Anspruch 7 oder 8, wobei:
die Drainagekomponente (10) Drainageöffnungen (2) und Überlauföffnungen (6) aufweist, wobei eine oder mehrere der Überlauföffnungen (6) einen Fluiddrainagepfad zwischen der ersten Seite der Drainagekomponente (10) und ihrer zweiten Seite bereitstellen und in der Drainagekomponente (10) relativ weiter weg von der Fluidkanalisierungsschicht (20) bereitgestellt sind als die Drainageöffnungen (2); und eine oder mehrere der Überlauföffnungen (6) so angeordnet sind, dass Fluid von der ersten Seite der Drainagekomponente (10) in einen Hohlraum zwischen der zweiten Seite der Drainagekomponente (10) und der Fluidkanalisierungsschicht (20) gehen kann.

10. Drainagesystem nach einem der vorangehenden Ansprüche, wobei:
die Drainagekomponente (10) außer an den Öffnungen im Wesentlichen fluidundurchlässig ist; und
die Drainagekomponente (10) ein fluiddurchlässiges Material aufweist und Drainageöffnungen (2) und Überlauföffnungen (6), die in Kombination Mikroöffnungen des fluiddurchlässigen Materials und Makroöffnungen aufweisen, bereitgestellt sind und wobei die Mikroöffnungen einen kontrollierten Widerstand gegen einen hindurchgehenden Fluidstrom bereitstellen.

11. Verfahren zum Herstellen eines Drainagesystems, wobei das Verfahren ein In-Kontakt-Bringen einer Drainagekomponente, die Sammelmulden aufweist, die zum Bereitstellen eines Volumens zur Fluidaufnahme im Drainagesystem angeordnet sind, wobei die Sammelmulden jeweils eine Öffnung enthalten, um eine Verbindung zwischen ihrer ersten Seite und ihrer zweiten Seite zu erlauben, mit einer Fluidkanalisierungsschicht aufweist, so dass in Gebrauch die Fluidkanalisierungsschicht zum Kanalisieren von Fluid von den Öffnungen und aus dem Drainagesystem hinaus in einer Ebene der Fluidkanalisierungsschicht angeordnet ist, wobei die Fluidkanalisierungsschicht zwischen der Drainagekomponente und einer im Wesentlichen fluidundurchlässigen Komponente angeordnet ist, wobei die Fluidkanalisierungsschicht ein fluiddurchlässiges Plattenmaterial aufweist, das die Kanalisierungsrate von Fluid im Drainagesystem gemäß einer Dochtwirkung der Fluidkanalisierungsschicht, Tiefe von Fluid, das in den Sammelmulden gesammelt ist, der Fläche der Fluidkanalisierungsschicht, die einem Fluidzustrom über die Öffnungen in den Sammelmulden ausgesetzt ist, und der Durchlässigkeit und dem Sättigungsgrad der Fluidkanalisierungsschicht kontrolliert.

12. Verfahren zum Bereitstellen von Drainage unter Verwendung eines eines Drainagesystems nach einem der Ansprüche 1 bis 10 oder eines Drainagesystems, das nach Anspruch 11 hergestellt ist, wobei das Verfahren ein Installieren des Drainagesystems auf einer zu drainierenden Oberfläche aufweist.

## Revendications

1. Système de drainage comprenant :
un composant de drainage (10) pour supporter un matériau au-dessus d'un premier de ses côtés et comprenant des évidements de collecte (4) conçus pour fournir un volume pour le stockage de fluides dans le système de drainage, les évidements de collecte (4) contenant chacun une ouverture pour permettre une communication de fluides entre le premier côté du composant de drainage et un deuxième côté du composant de drainage ; et
un composant essentiellement imperméable aux fluides (30),
une couche de canalisation de fluide (20) conçue pour canaliser du fluide à partir des ouvertures et hors du système de drainage par coopération avec le composant de drainage (10) ;
la couche de canalisation de fluide (20) étant disposée entre le composant de drainage (10) et le composant essentiellement imperméable aux fluides (30),
et **caractérisé en ce que**, en utilisation, la couche de canalisation de fluide (20) comprend un matériau en feuille perméable aux fluides qui régule le débit de canalisation des fluides dans le système de drainage dans le plan de la couche de canalisation de fluide (20), selon un effet de mèche de la couche de canalisation de fluide (20), une profondeur de fluide collectée dans les évidements de collecte (4), la zone de la couche de canalisation de fluide (20) exposée à l'afflux de fluide via les ouvertures formées dans les évidements de collecte (4), et la perméabilité et le degré de saturation de la couche de canalisation de fluide (20).

2. Système de drainage selon la revendication 1, dans lequel :
les ouvertures comprennent des ouvertures de drainage (2) ;
le composant de drainage (10) est disposé, en utilisation, avec le premier côté du composant de drainage dirigé vers le haut, et disposé de façon à recevoir du fluide drainé vers le bas sur le système de drainage ; et
la couche de canalisation de fluide (20) est disposée de façon à recevoir du fluide en provenance des ouvertures de drainage (2) du composant de drainage (10), et à canaliser ledit fluide dans le plan de la feuille.

3. Système de drainage selon la revendication 1 ou 2, dans lequel le composant essentiellement imperméable aux fluides (30) est collé à la couche de canalisation de fluide (20), ou est autrement solidaire de la couche de canalisation de fluide (20).

4. Système de drainage selon l'une quelconque des revendications précédentes, comprenant une couche de conformation conçue pour se comprimer ou se dilater et épouser, en utilisation, une surface sur laquelle le système de drainage est appliqué, la couche de conformation étant conçue pour :
maintenir, en utilisation, un contact étroit entre la couche de canalisation de fluide (20) et le composant essentiellement imperméable aux fluides (30) du système de drainage ; et/ou
maintenir, en utilisation, la couche de canalisation de fluide (20) selon un agencement généralement plan, par le fait d'épouser et d'amortir les irrégularités de la surface sur laquelle le système de drainage est appliqué en utilisation.

5. Système de drainage selon l'une quelconque des revendications précédentes, dans lequel :
les premier et deuxième côtés du composant de drainage (10) sont des faces opposées d'une feuille ;
la couche de canalisation de fluide (20) comprend une couche qui est en contact avec le deuxième côté du composant de drainage (10) ; et
le composant de drainage (10) et la couche de canalisation de fluide (20) sont en contact l'un avec l'autre autour des ouvertures de drainage (2).

6. Système de drainage selon l'une quelconque des revendications précédentes, dans lequel, sur le premier côté du composant de drainage (10), des parties de la couche de canalisation de fluide (20) sont disposées sous des parties du composant essentiellement imperméable aux fluides (30) et, sur un deuxième côté du composant de drainage (10), des parties de la couche de canalisation de fluide (20) sont disposées au-dessus de parties du composant essentiellement imperméable aux fluides (30).

7. Système de drainage selon l'une quelconque des revendications précédentes, dans lequel la couche de canalisation de fluide (20) est délimitée d'un côté par des parties du composant de drainage (10) et de l'autre côté par un composant essentiellement imperméable aux fluides (30).

8. Système de drainage selon la revendication 7, dans lequel la couche de canalisation de fluide (20) est disposée de façon à s'étendre à travers le composant de drainage (10) jusque dans un ou plusieurs des évidements de collecte (4), depuis le deuxième côté du composant de drainage (10), à travers le composant de drainage (10), jusqu'au premier côté du composant de drainage (10).

9. Système de drainage selon la revendication 7 ou 8, dans lequel :
le composant de drainage (10) comprend des ouvertures de drainage (2) et des ouvertures de débordement (6) avec une ou plusieurs des ouvertures de débordement (6) fournissant un chemin de drainage de fluide entre le premier côté du composant de drainage (10) et le deuxième côté de celui-ci, et prévues dans le composant de drainage (10) relativement plus loin de la couche de canalisation de fluide (20) que les ouvertures de drainage (2) ; et une ou plusieurs des ouvertures de débordement (6) sont conçues pour permettre à un fluide de passer du premier côté du composant de drainage (10) jusque dans un vide formé entre le deuxième côté du composant de drainage (10) et la couche de canalisation de fluide (20).

10. Système de drainage selon l'une quelconque des revendications précédentes, dans lequel :
le composant de drainage (10) est essentiellement imperméable aux fluides ailleurs qu'au niveau des ouvertures ; et
le composant de drainage (10) comprend un matériau perméable aux fluides, et des ouvertures de drainage (2) et des ouvertures de débordement (6) de celui-ci sont prévues, comprenant, en combinaison, des micro-ouvertures du matériau perméable aux fluides et des macro-ouvertures, et dans lequel les micro-ouvertures offrent une résistance contrôlée à l'écoulement de fluide à travers elles.

11. Procédé de fabrication d'un système de drainage, le procédé comprenant le fait d'amener un composant de drainage comportant des évidements de collecte conçus pour fournir un volume pour le stockage de fluides dans le système de drainage, les évidements de collecte contenant chacun une ouverture pour permettre une communication de fluides entre son premier côté et son deuxième côté en contact avec une couche de canalisation de fluide, de telle sorte qu'en utilisation la couche de canalisation de fluide soit conçue pour canaliser du fluide à partir des ouvertures et hors du système de drainage dans un plan de la couche de canalisation de fluide, la couche de canalisation de fluide étant disposée entre le composant de drainage et un composant essentiellement imperméable aux fluides, la couche de canalisation de fluide comprenant un matériau en feuille perméable aux fluides qui régule le débit de canalisation des fluides dans le système de drainage selon un effet de mèche de la couche de canalisation de fluide, une profondeur de fluide collectée dans les évidements de collecte, la zone de la couche de canalisation de fluide exposée à l'afflux de fluide via les ouvertures formées dans les évidements de collecte, et la perméabilité et le degré de saturation de la couche de canalisation de fluide.

12. Procédé de production d'un drainage à l'aide d'un système de drainage selon l'une quelconque des revendications 1 à 10, ou d'un système de drainage fabriqué selon la revendication 11, le procédé comprenant l'installation du système de drainage sur une surface à drainer.
